# EUROPEAN PATENT SPECIFICATION

(11) **EP 2 431 959 B1**
(45) Date of publication and mention of the grant of the patent: **13.09.2017**
(21) Application number: 11181323.4
(22) Date of filing: 15.09.2011
(51) Int. Cl.: G08G 1/16, G08G 1/0967

(54) **Safety system for a vehicle**
Sicherheitsvorrichtung für ein Fahrzeug
Système de sécurité pour véhicule

(30) Priority: 21.09.2010 SE 1050978
(43) Date of publication of application: 21.03.2012
(73) Proprietor: Scania CV AB, 151 87 Södertälje (SE)
(72) Inventor: Andersson, Jon, 144 62 Rönninge (SE); Ah-King, Joseph, 171 71 Solna (SE)
(74) Representative: Scania CV AB

(56) References cited:
- DE-A1- 19 842 176
- DE-A1-102006 056 444
- GB-A- 2 390 438
- JP-A- 2002 310 697
- JP-A- 2003 057 061
- US-A1- 2009 121 852

## Description

### Field of the invention

The present invention relates to a safety system according to the preamble of the independent claim, and in particular a system adapted to preventing vehicles from entering roads to which they have no access.

### Background to the invention

It has become increasingly common that vehicles, both trucks, buses and cars, are equipped with so-called "lane departure warning" (LDW) systems intended to warn a driver when the vehicle begins to move out of its current traffic lane, e.g. so that a flasher is activated. These systems are intended to reduce accidents by focusing on the main causes of collisions, viz. driver error, disturbing circumstances and driver tiredness.

There are two main types of systems:
Systems which warn the driver that the vehicle is leaving its lane, which warnings may be delivered by lamp signals, acoustic signals or vibration signals.
Systems which warn the driver and which, if there is no response, take automatic steps to ensure that the vehicle stays in its lane, e.g. by acting upon its steering wheel.

A typical LDW system uses a camera to detect lane markings and uses advanced image processing algorithms to analyse the resulting image information. The analysis results are then used to warn the driver and/or impart motion to the steering wheel in order to keep the vehicle in its lane.

US 7,269,493 refers to an LDW system intended to enhance safety by generating a warning in the form of an acoustic signal if the system finds that the vehicle is leaving its current lane in an uncontrolled way. If the driver does not act, the system will activate the vehicle's brake system.

US 7,551,103 refers to a warning system for vehicles, comprising inter alia an LDW system improved by associating with it an image processing system which receives and processes images representing the situation around the vehicle in order inter alia to enhance safety during lane changes. The information which the system accumulates may be presented to the driver in various ways, e.g. by visual presentation. It is also possible to have a vibrating unit in the steering wheel for conveying the information to the driver in a tactile way in cases of risk when, for example, overtaking.

An LDW system is usually left with only a limited power to take over active control of the vehicle, since the driver has continually to have the possibility of controlling the vehicle. There may therefore be bends or other driving situations in which the control facilities available to the system are not sufficient to keep the vehicle in its lane and which therefore need to be drawn to the driver's attention.
There may also be other reasons for the system being inactivated while in operation, e.g. when the sensors lose signals or targets, etc.

The commonest way of presenting the information is in the form of visual symbols on the driver display. Another common way is to generate acoustic signals intended to draw the driver's attention to a specific circumstance.

A further way of communicating with the driver is haptic (or tactile) communication, e.g. via the steering wheel. Tactile communication means that the signal is perceptible to the driver's sense organs, e.g. in the form of a vibration.

An example of information communicated haptically to the driver via the steering wheel appears in US 2007/0051547 which refers to a method for assisting him/her during various manoeuvres, e.g. when parking. Different turning motions may then be imparted to the steering wheel depending on the extent to which the driver follows a calculated itinerary, e.g. an increasing motion may be imparted if the steering wheel is not turned in a "correct" direction.

Further examples of LDW systems are described in WO 2009/022947 which refers to a method and a system for making it easier the driver to keep his/her vehicle in a traffic lane.

US 2007/0138347 refers to a system for providing a driver of a vehicle with information about its navigation. A route is determined on the basis of the vehicle's destination and current location and at least one vehicle parameter, e.g. the vehicle's width or height. The route determination caters inter alia for the presence of bridges along the itinerary.

Certain roads are less suitable, or sometimes not suitable at all, for trucks, e.g. roads with bridges which are so low that the vehicle cannot pass under them, or roads with bends so sharp that a long vehicle cannot negotiate them.
In addition, environmental zones are beginning to be introduced in which there are restrictions about which vehicles may enter them. An example of such a system is described in JP2003/057061 which refers to a navigation system to warn the driver if the vehicle enters a road that are not suitable, e.g. road sections that are so narrow that the vehicle width is too large for the vehicle to be able to pass the road section.

The object of the present invention is to propose a safety system which improves safety for a vehicle and makes driving easier for the driver.

### Summary of the invention

The above objects are achieved with the invention defined by the independent claim.

Preferred embodiments are defined by the dependent claims.

The invention comprises a safety system for a vehicle and a position determination unit adapted to determining the vehicle's current location and generating on the basis thereof a location signal which contains information about the location. The safety system further comprises an accessibility unit comprising one or more detector units adapted to detecting and identifying objects in the vehicle's surroundings and generating ambient data, and a memory unit containing map data and other input data. Said accessibility unit is adapted to generating an accessibility signal which contains information based on said ambient data, map data and other data and which indicates whether the vehicle is or is not allowed to travel along a road. The accessibility signal and the location signal are conveyed to an evaluation device which is adapted to determining accessibility for the vehicle at its current location and the itineraries which are permissible on the basis of the information in the accessibility signal, and to generating an evaluation signal indicating accessibility for the vehicle along the permissible itineraries.

According to a preferred embodiment, the evaluation signal is conveyed to a comparison unit which compares it with a number of dynamic criteria related to the vehicle, its current location and the permissible itineraries, and generates a warning signal based on the comparison. The warning signal may be a signal intended to make the driver aware that the vehicle is heading towards, for example, an obstacle, in which case the signal may be visual, acoustic or haptic or may generate active measures such as swerving or braking of the vehicle.

According to an embodiment of the present invention, an indication is given to the driver by a resistance in the steering wheel which prevents a vehicle from entering roads which it is not allowed to use. Which roads are deemed allowed or not may depend on legal regulations but it is also conceivable that the vehicle owner or operator may programme where the vehicle is allowed to travel and where not.

According to the invention, vehicle may find out where it is allowed to travel and where not on the basis of map data, recognition of road signs, infrastructure for vehicle communication or by other means. If the driver nevertheless tries to take a road which the vehicle is not allowed to use, he/she will for example feel a resistance in the steering wheel, possibly accompanied by acoustic, lamp or haptic signals, to draw his/her attention to the prohibition. The resistance in the steering wheel may vary between different versions, ranging from merely informing the driver to actually preventing the vehicle from travelling in the prohibited direction.

If the vehicle approaches the access to a prohibited road in such a way that a diversionary manoeuvre to an alternative road would be difficult, or if the system assesses the probability of the driver choosing the prohibited road as higher than a limit value, preventive action and/or a warning may be generated before the intersection. The limit value may range between 0 and 100%, such that the initial measures where the limit value is low comprise only, for example, an acoustic or lamp indication, whereas a high limit value entails more active measures, e.g. automatic braking of the vehicle.

One of the advantages of the present invention is that the driver is helped to find out where the vehicle is and is not allowed to travel, help which may sometimes be needed because a bus or truck driver has a great deal to find out about, particularly if he/she is inexperienced.

Accident risks and consequent losses of human life, injuries and economic damage are reduced. Even if no accident occurs, a heavy vehicle might damage the road, the environment and the health of residents in sensitive areas.

### Brief description of drawings

Figure 1 is a schematic block diagram illustrating the present invention.
Figure 2 illustrates schematically an embodiment of the present invention.

### Detailed description of preferred embodiments of the invention

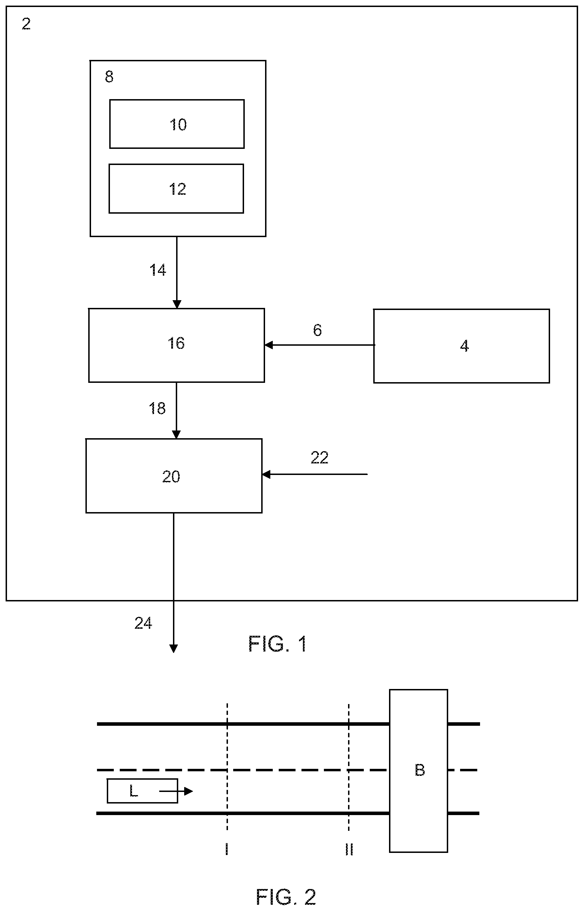

The invention is described below in more detail with reference to the attached drawings, initially with reference to Figure 1.

The present invention comprises a safety system 2 for a vehicle, e.g. a truck, a bus or a car, comprising a position determination unit 4 adapted to determining the vehicle's current location and generating on the basis thereof a location signal 6 which contains information about the current location. The position determination unit 6 is preferably a GPS unit which receives signals from a number of satellites and bases position determination on the content of those signals. The measurements resulting from repeated position determinations also indicate a direction of movement of the vehicle.

The safety system 2 further comprises an accessibility unit 8 comprising one or more detector units 10 adapted to detecting and identifying objects in the vehicle's surroundings and generating ambient data. These detector units 10 may for example be various units for visual scanning of the surroundings, e.g. cameras adapted to recognising various symbols and objects in the surroundings, e.g. road signs. The detector unit 10 may also comprise various radar systems.

In the accessibility unit 8 there is also a memory unit 12 containing map data and other input data. The map data comprises detailed information about the road network, e.g. about clear heights under bridges, accessibility for heavy vehicles, etc. The map data are dynamic and may be updated continuously. Other input data may be related to the vehicle, e.g. to its height, length and weight.

The accessibility unit 8 is adapted to generating an accessibility signal 14 containing information based on said ambient data, map data and other data, and indicating whether the vehicle is or is not allowed to travel along a road. The accessibility signal 14 thus provides complete information about which roads the vehicle has access to in an area covered by a map. The area does of course comprise the vehicle's current location and may for example take the form of a larger territory, e.g. the whole of Sweden.

The accessibility signal 14 and the location signal 6 are adapted to being conveyed to an evaluation device 16 which is itself adapted to determining accessibility for the vehicle at its current location and for future permissible itineraries based on the information in the accessibility signal 14, and to generating an evaluation signal 18 for the permissible itineraries indicating accessibility for the vehicle along said itineraries. This is done for example by identifying the vehicle's current location on the map and evaluating whether it is allowed to travel on the permissible roads ahead. The permissible itineraries may take the form of roads within a horizon of up to a kilometre ahead of the vehicle. The evaluation signal 18 contains for example information about the vehicle's distance from any obstacles along the permissible itineraries.

According to an alternative embodiment, the evaluation of whether an itinerary is permissible may also be done by using ambient data detected, e.g. road signs identified which for example indicate whether the vehicle is allowed to travel along a given road, and by using this information as a basis for generating the evaluation signal 18.

According to a preferred embodiment, the evaluation signal 18 is conveyed to a comparison unit 20 which compares it with a number of dynamic criteria 22 related to the vehicle, its current location and the permissible itineraries, and to generating on the basis of that comparison a warning signal 24 which contains warning measures related to the dynamic criteria 22.

The dynamic criteria 22 comprise inter alia respective probabilities that the driver may choose a specific itinerary from among the various permissible itineraries, the various probabilities being based on one or more from among his/her driving behaviour, the vehicle's speed and use of flashers. More than one parameter may of course be used in determining these probabilities, e.g. the vehicle's weight and size.

The probabilities are indicated in the form of a value *s* between 0 and 1, preferably in steps of 0.1. At low probability the value of *s* is below 0.2 and at high probability is over 0.8.
In an example, a vehicle approaches an intersection and activates its left flasher. In this case there is high probability that the vehicle will turn left at the intersection, and low probability that any of the other roads will be chosen.
In another example, a vehicle approaches an intersection at high speed, i.e. without having slowed down, so there is high probability that it will go straight on through the intersection.

The warning signal 24 may be visual, acoustic or haptic. A haptic signal may for example be adapted to acting upon the steering wheel to indicate to the driver that a chosen itinerary is not accessible. This may be done by imparting to the steering wheel an opposing motion which makes it more difficult to turn onto an unavailable itinerary.

According to a further embodiment, the warning signal 24 may be adapted to acting upon the vehicle's brakes to prevent it from continuing along a chosen itinerary which is not available.

According to another embodiment, the warning signal 24 may be adapted to acting upon the steering wheel to prevent the vehicle from continuing along a chosen itinerary which is not available. It is of course also possible to combine acting upon the brakes and the steering wheel and to combine the delivery of visual, acoustic or haptic signals with more active measures such as swerving and/or braking.

To sum up, the measures are related to the vehicle, its current location and permissible itineraries and may for example depend on its distance from an obstacle in such a way that different distances from it result in different warning measures.

The evaluation signal contains for example information about the vehicle's distance from obstacles along a chosen itinerary. The criteria in such a case may comprise various limit values for the distance from an obstacle, as illustrated in Figure 2, which depicts a vehicle L travelling along a road towards the right. Slightly ahead of the vehicle there is an obstacle, e.g. in the form of a bridge B with a clear height which does not allow the vehicle to pass. If the distance is shorter than a predetermined first distance, marked I in the diagram, a warning signal is generated in visual, acoustic or haptic form to make the driver aware that the vehicle cannot travel along the road. If despite the warning the driver carries on further than a predetermined second distance, marked II in the diagram, which is shorter than the first distance, the warning signal is adapted to acting upon the brakes and/or the steering wheel to prevent the vehicle from continuing along its current itinerary.

The present invention is not restricted to the preferred embodiments described above. Sundry alternatives, modifications and equivalents may be used. The above embodiments are therefore not to be regarded as limiting the invention's protective scope which is defined by the attached claims.

### Notation

- 2: safety system
- 4: position determination unit
- 6: location signal
- 8: accessibility unit
- 10: detector unit
- 12: memory unit
- 14: accessibility signal
- 16: evaluation device
- 18: accessibility signal
- 20: comparison unit
- 22: criteria
- 24: warning signal

## Claims

1. A safety system (2) for a vehicle comprising
a position determination unit (4) adapted to determining the vehicle's current location and generating on the basis thereof a location signal (6) which contains information about the vehicle's current location, which position determination unit (4) is a GPS unit,
and where said safety system (2) further comprises
an accessibility unit (8) comprising one or more detector units (10) adapted to detecting and identifying objects in the vehicle's surroundings and to generating ambient data and a memory unit (12) containing map data and other input data about the vehicle's height, length and weight, said accessibility unit (8) is adapted to generating an accessibility signal (14) which contains information based on said ambient data, map data and other data and which indicates accessibility for the vehicle along a road, said accessibility signal (14) and location signal (6) are arranged to be conveyed to an evaluation device (16) which is adapted to determining accessibility for the vehicle at its current location and for future permissible itineraries on the basis of the information in the accessibility signal (14), and to generating an evaluation signal (18) indicating accessibility for the vehicle along said permissible itineraries, and said evaluation signal (18) is arranged to be conveyed to a comparison unit (20) which compares it with a number of dynamic criteria (22) related to the vehicle, its current location and the permissible itineraries, and generates a warning signal (24) based on the comparison, **characterised in that** said dynamic criteria comprise probabilities that the driver may choose a specific itinerary from among the various permissible itineraries and that said probabilities are based on one or more from among the driver's driving behaviour, the vehicle's speed and use of flashers and said warning signal (24) contains warning measures related to said dynamic criteria and if the vehicle approaches access to a prohibited road in such a way that a diversionary manoeuvre to an alternative road would be difficult or if said safety system (2) assesses the probability of the driver choosing a prohibited road as higher than a limit value, preventive action and/or a warning may be generated before the intersection and if said limit value is low an initial warning measure is an acoustic, visual or haptic signal and if said limit value is high an initial warning measure entails a more active warning measure.

2. A safety system according to claim 1, in which said warning measures depend on the vehicle's distance from an obstacle in such a way that different distances from it result in different warning measures.

3. A safety system according to any one of claims 1-2, in which the warning signal (24) is adapted to acting upon the vehicle's steering wheel in order to indicate to the driver that a chosen itinerary is not available.

4. A safety system according to any one of claims 1-3, in which the warning signal (24) is adapted to acting upon the vehicle's steering wheel in order to prevent the vehicle from continuing along a chosen itinerary which is not available.

5. A safety system according to any one of claims 1-4, in which the warning signal (24) is adapted to acting upon the vehicle's brakes in order to indicate to the driver that a chosen itinerary is not available.

6. A safety system according to any one of the foregoing claims, in which said one or more detector units (10) comprise a camera adapted to recognising road signs.

7. A safety system according to any one of the foregoing claims, in which said evaluation signal (18) contains information about the vehicle's distance from obstacles along the permissible itineraries.

## Patentansprüche

1. Sicherheitssystem (2) für ein Fahrzeug, aufweisend:
eine Positionsbestimmungseinheit (4), die zum Bestimmen des aktuellen Standorts des Fahrzeugs und zum Erzeugen eines Standortsignals (6) auf dieser Basis eingerichtet ist, das Informationen über den aktuellen Standort des Fahrzeugs enthält, wobei die Positionsbestimmungseinheit (4) eine GPS-Einheit ist, und wobei das Sicherheitssystem (2) ferner aufweist:
eine Befahrbarkeitseinheit (8), die eine oder mehrere Detektoreinheiten (10) aufweist, die zum Erkennen von Objekten in der Umgebung des Fahrzeugs und zum Erzeugen von Umgebungsdaten eingerichtet sind, und eine Speichereinheit (12), die Kartendaten und andere Eingabedaten über Höhe, Länge und Gewicht des Fahrzeugs enthält, wobei die Befahrbarkeitseinheit (8) zum Erzeugen eines Befahrbarkeitssignals (14) eingerichtet ist, das Informationen auf Basis der Umgebungsdaten, Kartendaten und anderer Daten enthält, und die die Befahrbarkeit einer Straße für das Fahrzeug angeben, wobei das Befahrbarkeitssignals (14) und das Standortsignal (6) zu einer Auswertungseinheit (16) übertragen werden, die zum Bestimmen der Befahrbarkeit für das Fahrzeug aus gehend von seinem aktuellen Standort und für künftige zulässige Routen auf Basis der Informationen des Befahrbarkeitssignals (14) und zum Erzeugen eines Bewertungssignals (18) eingerichtet ist, das die Befahrbarkeit für das Fahrzeug entlang der zulässigen Routen angibt, und das Bewertungssignal (18) an eine Vergleichseinheit (20) übertragen wird, die es mit einer Reihe fahrzeugbezogener dynamischer Kriterien (22), dem aktuellen Standort und den zulässigen Routen vergleicht und auf Basis des Vergleichs ein Warnsignal (24) erzeugt,
**dadurch gekennzeichnet, dass** die dynamischen Kriterien Wahrscheinlichkeiten umfassen, dass der Fahrer eine spezifische Route aus den verschiedenen zulässigen Routen wählen kann, und dass diese Wahrscheinlichkeiten auf einer oder mehreren der folgenden basieren: Verhalten des Fahrers, Geschwindigkeit des Fahrzeugs und Verwendung von Blinkeinrichtungen, und dass das Warnsignal (24) Maßnahmen bezüglich der dynamischen Kriterien enthält, und wenn sich das Fahrzeug dem Zugang zu einer unzulässigen Straße auf eine solche Weise nähert, das ein Ausweichmanöver auf eine Alternativstraße schwierig wäre, oder wenn das Sicherheitssystem (2) die Wahrscheinlichkeit, dass der Fahrer eine unzulässige Straße wählt, als höher einschätzt als einen Grenzwert, kann eine Vorbeugungsmaßnahme und/oder eine Warnung vor der Kreuzung erzeugt werden, und wenn der Grenzwert niedrig ist, ist eine erste Warnmaßnahme ein akustisches, visuelles oder haptisches Signal, und wenn der Grenzwert hoch ist, ist eine erste Warnmaßnahme mit einer aktiveren Warnmaßnahme verbunden.

2. Sicherheitssystem nach Anspruch 1, wobei die Warnmaßnahmen vom Abstand des Fahrzeugs zu einem Hindernis in der Weise abhängen, dass verschiedene Abstände in unterschiedlichen Warnmaßnahmen resultieren.

3. Sicherheitssystem nach einem der Ansprüche 1 bis 2, wobei das Warnsignal (24) so auf das Lenkrad des Fahrzeugs wirkt, dass dem Fahrer angezeigt wird, dass eine gewählte Route nicht verfügbar ist.

4. Sicherheitssystem nach einem der Ansprüche 1 bis 3, wobei das Warnsignal (24) so auf das Lenkrad des Fahrzeugs wirkt, dass es das Fahrzeug daran hindert, weiter auf einer gewählten nicht verfügbaren Straße zu fahren.

5. Sicherheitssystem nach einem der Ansprüche 1 bis 4, wobei das Warnsignal (24) auf die Bremsen des Fahrzeugs wirkt, um dem Fahrer anzuzeigen, dass eine gewählte Route nicht verfügbar ist.

6. Sicherheitssystem nach einem der vorigen Ansprüche, wobei die eine oder die mehreren Detektoreinheiten (10) eine Kamera aufweist/aufweisen, die zum Erkennen von Verkehrszeichen eingerichtet ist/sind.

7. Sicherheitssystem nach einem der vorigen Ansprüche, wobei das Bewertungssignal (18) Informationen über den Abstand des Fahrzeugs von Hindernissen auf den zulässigen Routen enthält.

## Revendications

1. Système de sécurité (2) pour un véhicule, comprenant :
une unité de détermination de position (4) adaptée de façon à déterminer la localisation actuelle du véhicule et à générer en fonction de celle-ci un signal de localisation (6) qui contient une information concernant la localisation actuelle du véhicule, cette unité de détermination de position (4) étant une unité de système de localisation sur le globe (GPS),
et ledit système de sécurité (2) comprenant de plus :
une unité d'accessibilité (8) comprenant une ou plusieurs unités de détecteur (10) adaptées de façon à détecter et à identifier des objets dans l'entourage du véhicule et à générer des données ambiantes, et une unité de mémoire (12) contenant des données de carte et d'autres données d'entrée concernant la hauteur, la longueur et le poids du véhicule, ladite unité d'accessibilité (8) étant adaptée de façon à générer un signal d'accessibilité (14) qui contient une information basée sur lesdites données ambiantes, lesdites données de cartes, et d'autres données, et qui indique une accessibilité pour le véhicule le long d'une route, ledit signal d'accessibilité (14) et ledit signal de localisation (6) étant configurés de façon à être acheminés vers un dispositif d'évaluation (16) qui est adapté de façon à déterminer une accessibilité pour le véhicule dans sa localisation actuelle et pour de futurs itinéraires pouvant être autorisés en fonction de l'information dans le signal d'accessibilité (14), et à générer un signal d'évaluation (18) indiquant une accessibilité pour le véhicule le long desdits itinéraires pouvant être autorisés, et ledit signal d'évaluation (18) étant configuré de façon à être acheminé vers une unité de comparaison (20) qui le compare à un certain nombre de critères dynamiques (22) associés au véhicule, à sa localisation actuelle et aux itinéraires pouvant être autorisés, et qui génère un signal d'alarme (24) en fonction de la comparaison, **caractérisé en ce que** lesdits critères dynamiques comprennent des probabilités pour que le conducteur puisse choisir un itinéraire spécifique parmi les différents itinéraires pouvant être autorisés, et **en ce que** lesdites probabilités sont basées sur l'un ou sur plusieurs parmi le comportement de conduite du conducteur, la vitesse du véhicule et l'utilisation de clignotants, et ledit signal d'alarme (24) contenant des mesures d'alarme associées auxdits critères dynamiques, et, si le véhicule s'approche de l'accès à une route prohibée de telle sorte qu'une manoeuvre de déviation vers une route alternative soit difficile, ou si ledit système de sécurité (2) estime la probabilité pour que le conducteur choisisse une route prohibée comme étant supérieure à une valeur limite, une action préventive et/ou une alarme pouvant être générée avant l'intersection, et, si ladite valeur limite est faible, une mesure d'alarme initiale étant un signal acoustique, visuel ou haptique, et, si ladite valeur limite est élevée, une mesure d'alarme initiale mettant en oeuvre une mesure d'alarme plus active.

2. Système de sécurité selon la revendication 1, dans lequel lesdites mesures d'alarme dépendent de la distance du véhicule par rapport à un obstacle, de telle sorte que des distances différentes par rapport à celui-ci résultent en des mesures d'alarme différentes.

3. Système de sécurité selon l'une quelconque des revendications 1 à 2, dans lequel le signal d'alarme (24) est adapté de façon à agir sur le volant de direction du véhicule de façon à indiquer au conducteur qu'un itinéraire choisi n'est pas disponible.

4. Système de sécurité selon l'une quelconque des revendications 1 à 3, dans lequel le signal d'alarme (24) est adapté de façon à agir sur le volant de direction du véhicule de façon à empêcher le véhicule de poursuivre le long d'un itinéraire choisi qui n'est pas disponible.

5. Système de sécurité selon l'une quelconque des revendications 1 à 4, dans lequel le signal d'alarme (24) est adapté de façon à agir sur les freins du véhicule de façon à indiquer au conducteur qu'un itinéraire choisi n'est pas disponible.

6. Système de sécurité selon l'une quelconque des revendications précédentes, dans lequel lesdites unités de détecteur au nombre d'une ou de plusieurs (10) comprennent une caméra adaptée de façon à reconnaître des panneaux routiers.

7. Système de sécurité selon l'une quelconque des revendications précédentes, dans lequel ledit signal d'évaluation (18) contient une information concernant la distance du véhicule par rapport à des obstacles le long des itinéraires pouvant être autorisés.
